# EUROPÄISCHE PATENTSCHRIFT

(11) **EP 2 107 369 B1**
(45) Veröffentlichungstag und Bekanntmachung des Hinweises auf die Patenterteilung: **01.09.2010**
(21) Anmeldenummer: 09009514.2
(22) Anmeldetag: 23.06.2004
(51) Int. Cl.: G01N 27/90

(54) **WIRBELSTROMSONDE**
EDDY CURRENT PROBE
SONDE POUR MESURER DES COURANTS DE FOUCAULT

(30) Priorität: 09.07.2003 EP 03015494
(43) Veröffentlichungstag der Anmeldung: 07.10.2009
(62) Teilanmeldung aus: 04737133.1
(73) Patentinhaber: SIEMENS AKTIENGESELLSCHAFT, 80333 München (DE)
(72) Erfinder: Bär, Ludwig, 91056 Erlangen (DE); Heinrich, Werner, 16727 Oberkrämer OT Bärenklau (DE)

(56) Entgegenhaltungen:
- WO-A-99/23484
- DE-A1- 19 748 556
- US-A- 5 315 234
- US-A- 5 389 876

## Beschreibung

Die Erfindung betrifft eine Wirbelstromsonde.

Aus der DE 197 48 556 A1 ist eine Sonde für eine Wirbelstrommessung mit einer ferromagnetischen Signalverstärkung bekannt, wobei die Signalverstärkung durch einen starren ferritischen Kern erzeugt wird. Mit einer aus einem starren Substrat, auf dem planare Spulen aufgebracht sind, gebildeten Sonde können nur Prüfkörper mit ebener Oberfläche vermessen werden. Bei unebenen Oberflächen muss die Sonde in ihrer Form einer Oberfläche des Prüfkörpers angepasst sein, anderenfalls ergeben sich falsche Messwerte.

Eine Sonde mit Wirbelstrommessung mit ferromagnetischer Signalverstärkung für ebene Prüfkörper ist auch aus der US-PS 6,002,251 bekannt.

Aus der US-PS 5,389,876 ist eine flexible Sonde für eine Wirbelstrommessung bekannt, die eine Hinterfütterung mit ferritischem Material hat.

Die nachveröffentlichte EP 1 329 730 A1 zeigt eine Sonde für eine Wirbelstrommessung, die eine flexible Hinterfütterung aufweist. Die Hinterfütterung ist durch eine mit Ferrit gefüllte Polymerfolie gebildet.

Eine Wirbelstromsonde mit einer elastischen Hinterfütterung, die ebenfalls ferritisches Material enthält, ist in der US-PS 5,315,234 beschrieben.

Aufgabe der Erfindung ist es, bei einer Sonde für elektrische Messverfahren, die für verschieden gekrümmte Oberflächen eines Prüfkörpers verwendet werden kann, die Anpassbarkeit an die Oberflächen des Prüfkörpers zu verbessern.

Die Aufgabe wird durch eine Wirbelstromsonde gemäß Anspruch 1 gelöst.

Weitere vorteilhafte Ausgestaltungen der erfindungsgemäßen Sonde sind in den Unteransprüchen erwähnt.

Die Sonde kann sich Krümmungsradien von z.B. 50mm oder größer anpassen.

Vorteilhafterweise wird die Flexibilität dadurch erreicht, dass ein durch eine flexible Folie gebildetes Substrat, für die Sonde vorteilhafterweise Polyimid, verwendet wird.

Vorteilhafterweise sind auf der flexiblen Folie bspw. zwei, insbesondere planare Spulen, insbesondere aus Kupfer, als elektrische Bauelemente, aufgebracht.

Die Flexibilität der Sonde bleibt auch durch eine dauerelastische Hinterfütterung der elektrischen Bauelemente erhalten.

Vorteilhafterweise verwendet man eine Hinterfütterung , die mit einem Ferrit gefüllt ist, so dass vorteilhafterweise eine ferromagnetische Signalverstärkung möglich ist.

Ausführungsbeispiele der Erfindung sind in den Zeichnungen vereinfacht und schematisch dargestellt.

Es zeigen:
Figur 1 eine Anordnung von Erreger und Signalspule,
Figur 2 ein erstes Ausführungsbeispiel einer erfindungsgemäßen Sonde, und
Figur 3 ein weiteres Ausführungsbeispiel einer erfindungsgemäß ausgebildeten Sonde.

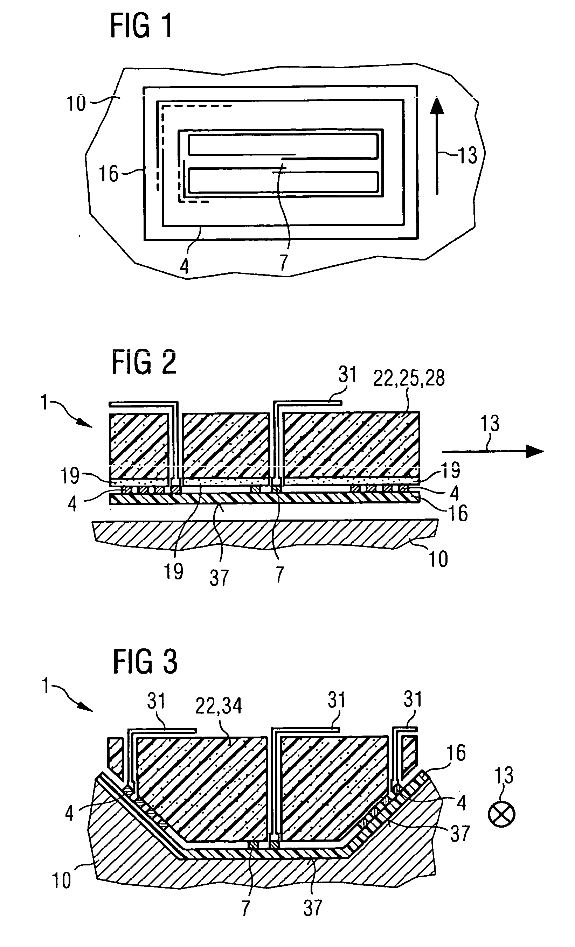

Figur 1 zeigt eine Erregerspule 4 und eine Signalspule 7 als elektrische Bauelemente in ihrer Anordnung in einer Ebene nach dem Stand der Technik.

Die Signalspule 7 ist bspw. von der Erregerspule 4 umgeben. Bezüglich des weiteren beispielhaften Aufbaus von Erregerspule 4, Signalspule 7 und eines Auswertungssystems mit einer Sonde wird auf die DE 197 48 556 A1 verwiesen.

Die Erreger- und Signalspule 4, 7 sind elektrisch voneinander getrennt. Die Signalspule 7 ist in diesem Beispiel als Differenzsonde ausgelegt. Die Ortsauflösung wird bestimmt durch den Abstand der Schwerpunkte der beiden Teilspulen, der sogenannten Baseline.

Die Erregerwicklung 4 umschließt die Teilspulen der Signalspule 7 bspw. symmetrisch, so dass eine Kompensation des Erregerfeldes gewährleistet ist. Somit liegen die Erregerwicklung 4 und die Signalspule 7 in einer Ebene bzw. auf ein und derselben Oberfläche des Substrats 16. Ausführungsbeispiele für Sonden sind:
Eine XXL-Sonde hat eine Baseline von 3,3mm, eine Erregerspule mit 21 Windungen und eine Signalspule mit 8 Windungen.
Eine S-Sonde hat eine Baseline mit 2,3mm, eine Erregerspule mit 9 Windungen und eine Signalspule mit 5 Windungen.

Eine Sonde, die unter anderem aus der Erregerspule 4 und Signalspule 7 besteht, wird in einer Scanrichtung 13, gekennzeichnet durch einen Pfeil, über eine Oberfläche eines Prüfkörpers 10 bewegt (durch gestrichelte Umfangslinie angedeutet), wobei die Sonde 1 auf dem Prüfkörper 10 mit einer Auflagefläche 37 (Fig. 2) zur Auflage kommt. Der Prüfkörper 10 enthält beispielsweise Defekte in Form von Rissen, die ein magnetisches Signal der Erregerspule 4 beeinflussen, wodurch die Defekte im Inneren des Prüfkörpers 10 und an dessen Oberfläche festgestellt werden können.

Figur 2 zeigt ein erstes Ausführungsbeispiel für eine Sonde 1 für elektrische Messverfahren gemäß vorliegender Erfindung. Als Substrat 16, das direkt auf dem Prüfkörper aufliegt, wird bspw. eine Folie verwendet, die flexibel und bspw. auch elastisch, insbesondere dauerelastisch ist. Vorzugsweise wird eine Polyimidfolie verwendet.

Dauerelastizität bedeutet, dass die mechanische Elastizität zumindest über die Lebensdauer der Sonde 1 erhalten bleibt. Auf dem Substrat 16 sind die Erregerspule 4 und die Signalspule 7 bspw. planar angeordnet, d.h. die Spule besteht nur aus einer Leiterbahn, die nur in einer Ebene verläuft. Die Spulen 4, 7 als elektrische Bauelemente können mittels eines Galvanikprozesses oder eines nasschemischen Verfahrens auf die Folie 16 aufgebracht werden.

Auf dem Substrat 16 und auf bzw. um die Spulen 4, 7 ist beispielsweise, aber nicht notwendigerweise ein Kleber 19 aufgebracht, der eine Hinterfütterung 22 mit dem Substrat 16 verbindet.

Die Hinterfütterung 22 ist elastisch, insbesondere dauerelastisch ausgeführt.

Als Material für die Hinterfütterung 22 wird ein ferritisches Material zur Signalverstärkung, insbesondere zur ferromagnetischen Signalverstärkung verwendet bspw. mit einer Permeabilität µ bis 100. Durch die Hinterfütterung 22 hindurch führt bspw. zumindest eine elektrische Zuleitung 31 für die Spulen 4, 7 für ein Messsystem gemäss DE 197 48 556 A1.

Als Hinterfütterung 22 wird ein gasgefülltes Material, insbesondere Kunststoff oder Gummi, verwendet.

Die Polyimidfolie 16 hat beispielsweise eine Dicke von 25µm, die Kupferspule eine Dicke von 17 µm, der Kleber erstreckt sich über eine Dicke von ca. 30 µm, und die mit Ferrit gefüllte Polymerfolie über eine Dicke von 200 - 600 µm.

Dieser Schichtstapel aus Substrat 16 und Hinterfütterung 22 bleibt hinreichend flexibel, so dass sich der Schichtstapel verschiedenen Krümmungsradien des Prüfkörpers 10 von z.B. 50mm oder mehr problemlos anpassen lässt.

Figur 3 zeigt ein weiteres Ausführungsbeispiel einer erfindungsgemäß ausgebildeten planaren Sonde 1.

Die Hinterfütterung 22 kann auch durch ein gasgefülltes Material 34 gewährleistet sein, in dem Ferritpulver vermischt ist. Der mittlere Durchmesser der Ferritpartikel beträgt z.B. ca. 10µm. Die Hinterfütterung 22 bleibt elastisch, insbesondere dauerelastisch verformbar, so dass eine Flexibilität der Sonde 1 dauerhaft gewährleistet ist.

Die Sonde 1 ist so groß gestaltet, dass sie den gesamten zu überprüfenden Bereich des Prüfkörpers 10, beispielsweise eine Mulde, wie in Figur 3 beispielsweise dargestellt ist, abdeckt, so dass der zu überprüfende Bereich in einem Scan, also durch einmaliges Verfahren der Sonde 1 überprüft wird.

Solche Mulden treten beispielsweise bei tannbaumförmig ausgestalteten Schaufelfüßen einer Turbinenschaufel auf.

Als elektrisches Messverfahren kann die Sonde 1, die zwei Spulen 4, 7 oder nur eine Spule sowie eine ferromagnetische Signalverstärkung 22 aufweist, zur Wirbelstrommessung genutzt werden, das beispielsweise dazu dient Defekte an metallischen Bauteilen 10 zu detektieren.

## Patentansprüche

1. Wirbelstromsonde (1) für elektrische Messverfahren,
die ein Substrat (16) aufweist,
das zur Auflage auf einen Prüfkörper (10) kommt, wobei auf dem Substrat (16) zwei elektrische Bauelemente (47) aufgebracht sind,
wobei die Sonde (1) mit dem Substrat (16) so flexibel ist, dass die Sonde (1) mit dem Substrat (16) sich verschiedenen Krümmungsradien des Prüfkörpers (10) anpassen kann,
wobei die Sonde (1) eine Hinterfütterung (22) mit ferritischem Material aufweist,
die (22) zumindest ein elektrisches Bauelement (4, 7) zumindest teilweise abdeckt,
die (22) elastisch ausgebildet ist,
wobei die Sonde (1) eine Erregerwicklung (4) als erstes elektrisches Bauelement und eine Signalspule (7) als zweites elektrisches Bauelement umfasst, **dadurch gekennzeichnet dass** die Erregerwicklung (4) die Teilspulen der Signalspule (7) umschließt,
die Signalspule (7) und die Erregerspule (4) in einer Ebene oder auf ein und derselben Oberfläche des Substrats (16) liegen, und
die Hinterfütterung (22) ein gasgefülltes Material ist.

2. Wirbelstromsonde nach Anspruch 1,
**dadurch gekennzeichnet, dass**
die Hinterfütterung (22) ein Kunststoff oder Gummi ist.

3. Wirbelstromsonde nach Anspruch 1,
**dadurch gekennzeichnet, dass**
das Substrat (16) eine flexible Folie ist.

4. Wirbelstromsonde nach Anspruch 3,
**dadurch gekennzeichnet, dass**
die Folie (16) aus Polyimid gebildet ist.

5. Wirbelstromsonde nach Anspruch 1,
**dadurch gekennzeichnet, dass**
die Sonde (1) zumindest eine Spule (4, 7) als elektrisches Bauelement aufweist, die planar auf dem Substrat (16) angeordnet sind.

6. Wirbelstromsonde nach Anspruch 1,
**dadurch gekennzeichnet, dass**
die Sonde (1) eine ferromagnetische Signalverstärkung (22) aufweist.

7. Wirbelstromsonde nach Anspruch 1,
**dadurch gekennzeichnet, dass**
die Sonde (1) Krümmungsradien von bis zu 50mm anpassbar ist.

8. Wirbelstromsonde nach Anspruch 1,
**dadurch gekennzeichnet, dass**
die Erregerspule (4) und die Signalspule (7) in einer Ebene angeordnet sind.

9. Wirbelstromsonde nach Anspruch 1,
**dadurch gekennzeichnet, dass**
mit der Sonde (12) der gesamte zu überprüfende Bereich abgedeckt wird.

## Claims

1. Eddy current probe (1) for electrical measurement methods, which has a substrate (16) with a resting surface (37),
the resting surface (37) comes to lie on a test piece (10), two electrical components (47) being mounted on the substrate (16),
the probe (1) with the substrate (16) being so flexible that the probe (1) with the substrate (16) can adapt itself to different radii of curvature of the test piece (10), the probe (1) having a backing (22) with ferritic material, which (22) at least partly covers at least one electrical component (4, 7),
which (22) is formed elastically,
the probe (1) comprising an exciter winding (4) as the first electrical component and a signal coil (7) as the second electrical component, **characterized in that** the exciter winding (4) encloses the coil sections of the signal coil (7),
the signal coil (7) and the exciter coil (4) lie in one plane or on one and the same surface of the substrate (16), and
the backing (22) is a gas-filled material

2. Eddy current probe according to Claim 1,
**characterized in that**
the backing (22) is a plastic or rubber.

3. Eddy current probe according to Claim 1,
**characterized in that**
the substrate (16) is a flexible film.

4. Eddy current probe according to Claim 3,
**characterized in that**
the film (16) is formed from polyimide.

5. Eddy current probe according to Claim 1,
**characterized in that**
the probe (1) has as an electrical component at least one coil (4, 7), which is arranged on the substrate (16) in a planar manner.

6. Eddy current probe according to Claim 1,
**characterized in that**
the probe (1) has a ferromagnetic signal amplification (22).

7. Eddy current probe according to Claim 1,
**characterized in that**
the probe (1) is adaptable to radii of curvature of up to 50 mm.

8. Eddy current probe according to Claim 1,
**characterized in that**
the exciter coil (4) and the signal coil (7) are arranged in one plane.

9. Eddy current probe according to Claim 1,
**characterized in that**
the entire region to be examined is covered by the probe (12).

## Revendications

1. Sonde ( 1 ) à courant de Foucault pour des procédés de mesure électriques,
qui comporte un substrat ( 16 ),
qui vient reposer sur un échantillon ( 10 ),
deux composants ( 47 ) électriques étant déposés sur le substrat ( 16 ),
dans laquelle la sonde ( 1 ) avec le substrat ( 16 ) est si souple que la sonde ( 1 ), avec le substrat ( 16 ), peut s'adapter à divers rayons de courbure de l'échantillon ( 10 ), dans laquelle la sonde ( 1 ) comporte un garnissage ( 22 ) arrière ayant du matériau ferritique,
qui ( 22 ) recouvre au moins en partie au moins un composant ( 4, 7 ) électrique,
qui ( 22 ) est constitué d'une manière élastique,
la sonde ( 1 ) comprenant un enroulement ( 4 ) d'excitation comme premier composant électrique et une bobine ( 7 ) de signal comme deuxième composant électrique,
**caractérisée en ce que** l'enroulement ( 4 ) d'excitation entoure les bobines partielles de la bobine ( 7 ) de signal,
la bobine ( 7 ) de signal et la bobine ( 4 ) d'excitation se trouvent dans un plan ou sur une seule et même surface du substrat ( 16 ), et
le garnissage ( 22 ) arrière est un matériau rempli de gaz.

2. Sonde à courant de Foucault suivant la revendication 1, **caractérisée en ce que**,
le garnissage ( 22 ) arrière est une matière plastique ou du caoutchouc.

3. Sonde à courant de Foucault suivant la revendication 1, **caractérisée en ce que**,
le substrat ( 16 ) est une feuille souple.

4. Sonde à courant de Foucault suivant la revendication 3, **caractérisée en ce que**,
la feuille ( 16 ) est en polyimide.

5. Sonde à courant de Foucault suivant la revendication 1, **caractérisée en ce que**,
la sonde ( 1 ) comporte au moins une bobine ( 4, 7 ) comme composant électrique, qui est disposée de manière planaire sur le substrat ( 16 ).

6. Sonde à courant de Foucault suivant la revendication 1, **caractérisée en ce que**,
la sonde ( 1 ) comporte une amplification ( 22 ) ferromagnétique du signal.

7. Sonde à courant de Foucault suivant la revendication 1, **caractérisée en ce que**,
la sonde ( 1 ) est adaptable à des rayons de courbure allant jusqu'à 50 mm.

8. Sonde à courant de Foucault suivant la revendication 1, **caractérisée en ce que**,
la bobine ( 4 ) d'excitation et la bobine ( 7 ) de signal sont disposées dans un plan.

9. Sonde à courant de Foucault suivant la revendication 1, **caractérisée en ce que**,
toute la partie à examiner est recouverte de la sonde ( 12 ).
